# EUROPEAN PATENT APPLICATION

(11) **EP 2 407 853 A1**
(43) Date of publication of application: **18.01.2012**
(21) Application number: 11173507.2
(22) Date of filing: 12.07.2011
(51) Int. Cl.: G06F 1/16, H04M 1/02

(54) **Electronic apparatus with stand**

(30) Priority: 14.07.2010 JP 2010159238
(71) Applicant: Funai Electric Co., Ltd., Daito-shi, Osaka 574-0013 (JP)
(72) Inventor: Yamagiwa, Daisuke, Daito-shi, Osaka 574-0013 (JP)
(74) Representative: Grünecker, Kinkeldey, Stockmair & Schwanhäusser

(57) **Abstract**

This portable telephone (100) includes a body portion (1), a display portion (2), a stylus pen (4) and a penholder (5), and is so formed that the user can move the stylus pen held in the penholder to a standing position where the stylus pen functions as a stand and to a stored position where the stylus pen is arranged when in an unused state neither employed as an input pen nor functioning as the stand.

## Description

### BACKGROUND OF THE INVENTION

### Field of the Invention

The present invention relates to an electronic apparatus, and more particularly, it relates to an electronic apparatus including an input pen employed for a touch panel display portion.

### Description of the Background Art

An electronic apparatus including an input pen employed for a touch panel display portion is known in general, as disclosed in Japanese Patent Laying-Open No. 2006-4400, for example.

The aforementioned Japanese Patent Laying-Open No. 2006-4400 discloses a tablet PC (electronic apparatus) including a body portion, a touch panel display, an input stylus pen employed for the touch panel display and a slender groove provided on a side surface of the body portion for storing the stylus pen. In this tablet PC, a recess portion is formed on the rear surface of the touch panel display, and the forward end portion of the stylus pen is inserted into the recess portion so that the stylus pen functions as a stand for the touch panel display. Thus, the user can employ the input stylus pen as the stand.

In the tablet PC (electronic apparatus) according to the aforementioned Japanese Patent Laying-Open No. 2006-4400 enabling the user to employ the input stylus pen as the stand, however, the user must extract the stylus pen from the recess portion provided on the rear surface of the touch panel display and arrange the same on a stored position in the slender groove of the body portion in order to store the stylus pen in the stored position after employing the same as the stand, while he/she must extract the stylus pen from the slender groove and thereafter arrange the same on a standing position (where the stylus pen functions as the stand) by inserting the stylus pen into the recess portion provided on the rear surface of the touch panel display in order to employ the stylus pen as the stand. Thus, in the tablet PC (electronic apparatus) according to the aforementioned Japanese Patent Laying-Open No. 2006-4400, the user is disadvantageously required to perform complicated operations in a case of storing the stylus pen and in a case of employing the same as the stand.

### SUMMARY OF THE INVENTION

The present invention has been proposed in order to solve the aforementioned problem, and an object of the present invention is to provide an electronic apparatus capable of preventing the user from complicated operations in a case of storing a pen employed for inputting data into a touch panel display portion and in a case of employing the pen as a stand.

An electronic apparatus according to an aspect of the present invention includes a body portion, a touch panel display portion, a pen employed for inputting data into the display portion and a penholder detachably holding the pen so that the user can detach the pen from the penholder when employing the pen as an input pen, and is so formed that the user can move the pen held in the penholder to a standing position where the pen functions as a stand for the body portion and to a stored position where the pen is arranged when in an unused state neither employed as the input pen nor functioning as the stand.

As hereinabove described, the electronic apparatus according to the aspect of the present invention is so formed that the user can move the pen held in the penholder to the standing position where the pen functions as the stand for the body portion and to the stored position where the pen is arranged in the unused state neither employed as the input pen nor functioning as the stand, whereby the user can move the pen to both of the standing position and to the stored position while keeping the pen held in the penholder. Thus, the user may not detach or insert the pen from or into the penholder in both of a case of employing the pen as the stand and thereafter storing the same in the stored position and a case of employing the pen as the stand from the stored state, but can easily store the pen or employ the same as the stand by simply moving the pen held in the penholder. Thus, this electronic apparatus can prevent the user from complicated operations in the case of storing the pen employed for inputting data into the touch panel display portion and in the case of employing the pen as the stand.

In the aforementioned electronic apparatus according to the aspect, the pen is preferably so formed that the user moves the pen to the standing position and to the stored position by rotating the pen with respect to the body portion in the state held in the penholder. According to this structure, the user can easily move the pen to the standing position and to the stored position by simply rotating the pen with respect to the body portion, whereby operations of the user can be more simplified in the case of storing the pen and in the case of employing the pen as the stand.

In this case, the penholder is preferably formed to be rotatable with respect to the body portion and has a first engaging portion, and the first engaging portion of the penholder is preferably formed to engage with a second engaging portion provided on the body portion in a state where the pen is located on the standing position for regulating rotation of the pen from the standing position. According to this structure, the first and second engaging portions can regulate rotation of the pen from the standing position when the pen is located on the standing position, whereby the pen can stably support the body portion.

In the aforementioned structure including the penholder having the first engaging portion, the first engaging portion of the penholder is preferably formed to engage with a third engaging portion provided on the body portion in a state where the pen is located on the stored position for regulating rotation of the pen from the stored position. According to this structure, the first and third engaging portions can regulate rotation of the pen from the standing position when the pen is located on the stored position, whereby the user can reliably store the pen in the stored position.

In the aforementioned structure including the penholder having the first engaging portion, the standing position preferably includes a first standing position corresponding to the second engaging position and a second standing position where the pen is at a rotation angle different from that on the first standing position, and the first engaging portion of the penholder is preferably formed to engage with the second engaging portion corresponding to the first standing position for regulating rotation of the pen from the first standing position and to engage with a fourth engaging portion corresponding to the second standing position for regulating rotation of the pen from the second standing position. According to this structure, the pen can stably support the body portion on both of the first and second standing positions where the same is at different rotation angles, whereby the user can properly use the first and second standing positions in response to the situation of the place where the body portion is set. Thus, the convenience of the user can be improved.

In the aforementioned structure including the penholder having the first engaging portion, the first engaging portion preferably has either a concave shape or a convex shape, and the second engaging portion preferably has either a convex shape or a concave shape corresponding to the concave or convex shape of the first engaging portion. According to this structure, the first and second engaging portions can easily engage with each other due to the combination of the concave and convex shapes.

In the aforementioned electronic apparatus according to the aspect, the body portion preferably includes a recess portion for storing the pen, and the pen is preferably so formed that the user arranges the pen on the stored position by inserting the pen held in the penholder into the recess portion in the unused state. According to this structure, the user can arranged the pen in the recess portion of the body portion when storing the same, whereby increase in outer size of the electronic apparatus storing the pen can be suppressed, dissimilarly to a case where the user arranges the pen outside the body portion when storing the same.

In the aforementioned electronic apparatus according to the aspect, the pen is preferably expandable/contractable, and formed to be capable of functioning as the stand for the body portion in both of an expanded state and a contracted state on the standing position. According to this structure, the user can easily change the angle of inclination of the display portion with respect to the set surface by expanding or contracting the pen on the standing position.

In this case, the pen is preferably so formed that the user stores the pen in the stored position in the contracted state. According to this structure, the user can store the pen in the stored position in a compactly contracted state, whereby the body portion may not be increased in size in order to store the pen but can be compactified as compared with a case where the user stores the pen in the expanded state.

In the aforementioned electronic apparatus according to the aspect, the pen is preferably so formed that the user moves the pen to the standing position and to the stored position while the penholder holds the pen and covers the nib. According to this structure, the penholder can protect the nib against scratches when the user moves the pen to the standing position and to the stored position.

In the aforementioned electronic apparatus according to the aspect, the penholder is preferably provided on the rear side of the body portion opposite to the side provided with the display portion, and the pen is preferably formed to function as the stand by supporting the rear side of the body portion in the state held in the penholder provided on the rear side of the body portion. According to this structure, the pen is not arranged on the side provided with the display portion when functioning as the stand, whereby the same can be prevented from blocking the visual field of the user watching the display portion.

In this case, a recess portion for storing the pen is preferably provided on the rear side of the body portion, and the pen is preferably formed to be flush with the rear surface of the body portion in a state stored in the recess portion. According to this structure, the pen is flush with the rear surface of the body portion in the state stored in the recess portion, whereby the same can be prevented from touching the hand of the user when he/she carries the electronic apparatus.

In the aforementioned electronic apparatus according to the aspect, the penholder is preferably provided in the vicinity of an outer edge portion of the body portion. According to this structure, the user can easily change the angle of inclination of the display portion with respect to the set surface by upwardly or downwardly directing the outer edge portion of the body portion on the side provided with the penholder while arranging the pen held in the penholder on the standing position.

The aforementioned electronic apparatus according to the aspect preferably has a camera function, the body portion is preferably provided with a plurality of camera lenses, and at least one of the plurality of camera lenses is preferably provided on the front side of the body portion opposite to the side where the pen is arranged when functioning as the stand for the body portion. According to this structure, the user can easily take a photograph with the camera lens provided on the front side of the body portion by employing a self-timer or the like while using the pen as the stand for the body portion so that the body portion is self-supportable.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front elevational view showing a portable telephone according to an embodiment of the present invention;
Fig. 2 is a rear elevational view showing the portable telephone according to the embodiment of the present invention;
Fig. 3 illustrates a state where a stylus pen of the portable telephone according to the embodiment of the present invention is extracted from a penholder;
Fig. 4 is a perspective view showing the stylus pen of the portable telephone according to the embodiment of the present invention;
Fig. 5 is a perspective view showing a state where the stylus pen of the portable telephone according to the embodiment of the present invention is stored;
Fig. 6 is a perspective view showing a state where the stylus pen of the portable telephone according to the embodiment of the present invention is rotated to a first standing position;
Fig. 7 is a perspective view showing a state where the stylus pen of the portable telephone according to the embodiment of the present invention is rotated to a second standing position;
Fig. 8 is a sectional view taken along the line 300-300 in Fig. 2;
Fig. 9 is a sectional view taken along the line 400-400 in Fig. 8;
Fig. 10 is a perspective view showing a state where the stylus pen of the portable telephone according to the embodiment of the present invention is rotated to the first standing position when the same is positioned on an upper side;
Fig. 11 is a perspective view showing a state where the stylus pen of the portable telephone according to the embodiment of the present invention is rotated to the second standing position when the same is positioned on the upper side;
Fig. 12 is a perspective view showing the portable telephone according to the embodiment of the present invention in a vertically placed state; and
Fig. 13 is a perspective view showing a modification of the portable telephone according to the embodiment of the present invention.

### DESCRIPTION OF THE PREFERRED EMBODIMENTS

An embodiment of the present invention is now described with reference to the accompanying drawings.

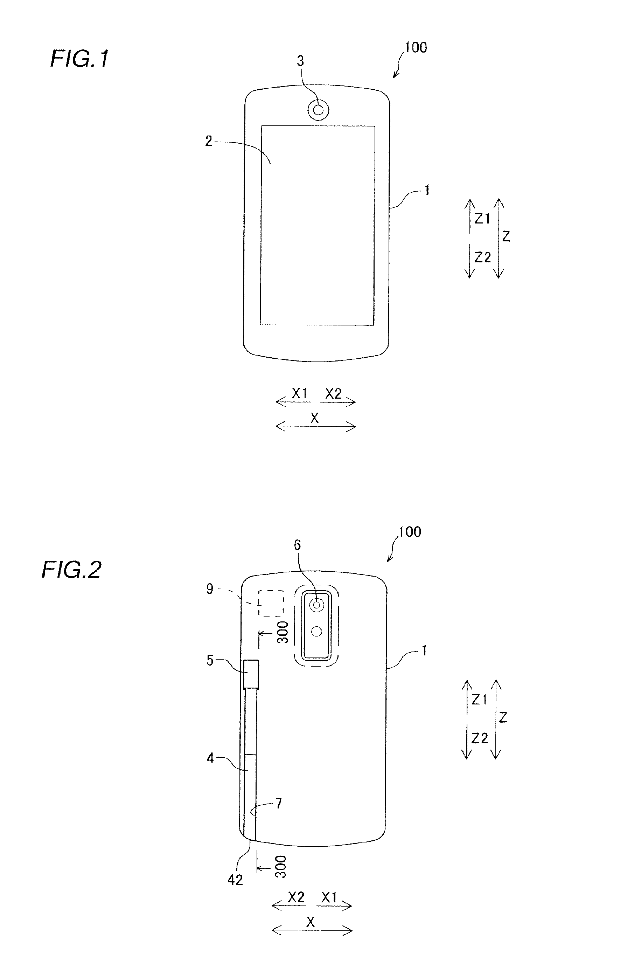

First, the structure of a portable telephone 100 according to the embodiment of the present invention is described with reference to Figs. 1 to 12. The portable telephone 100 is an example of the "electronic apparatus" in the present invention.

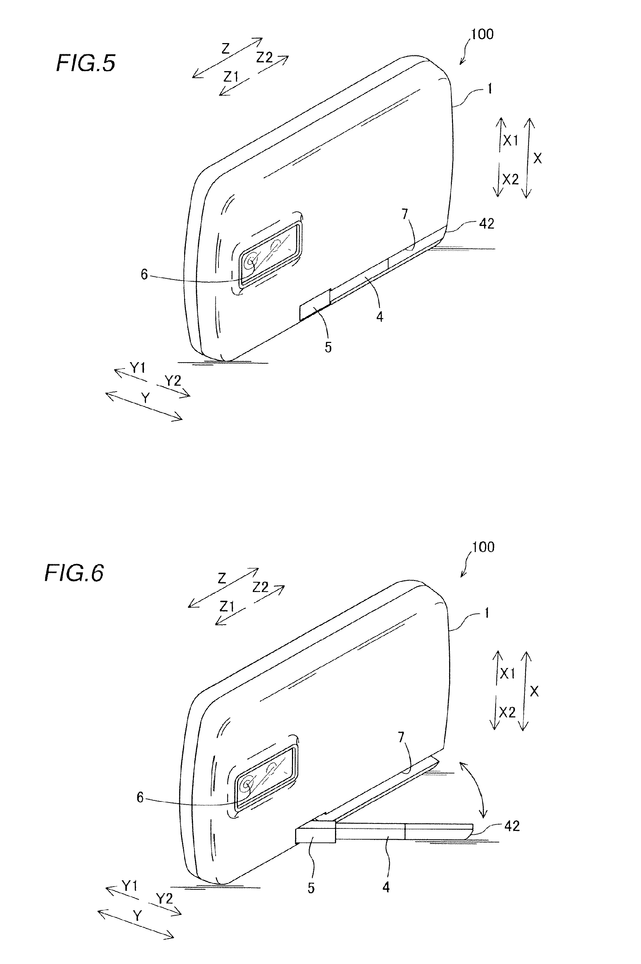

The portable telephone 100 according to the embodiment of the present invention includes a substantially rectangular body portion 1 and a touch panel display portion 2 arranged on the front side of the body portion 12 as viewed from the front side (along arrow Y1 in Fig. 5), as shown in Fig. 1. The portable telephone 100 has a camera function, and a camera lens 3 is provided on the front side of the body portion 1, to be adjacent to the upper side (along arrow Z1) of the display portion 2. The portable telephone 100 further includes a stylus pen 4 employed for the touch panel display portion 2 and a penholder 5 detachably holding the stylus pen 4. Another camera lens 6 is provided on the rear side (along arrow Y2 in Fig. 5) of the body portion 1. The camera lenses 3 and 6 are so formed that the user switches the same and uses either one thereof when taking a photograph. A storage portion 7 for storing the stylus pen 4 is provided on the rear side of the body portion 1. The body portion 1 is provided with a communication portion 9 enabling the user to make a telephone call. The stylus pen 4 is an example of the "pen" in the present invention, and the storage portion 7 is an example of the "recess portion" in the present invention.

The display portion 2 is substantially rectangular, as shown in Fig. 1. The display portion 2 is constituted of a resistive film type touch panel.

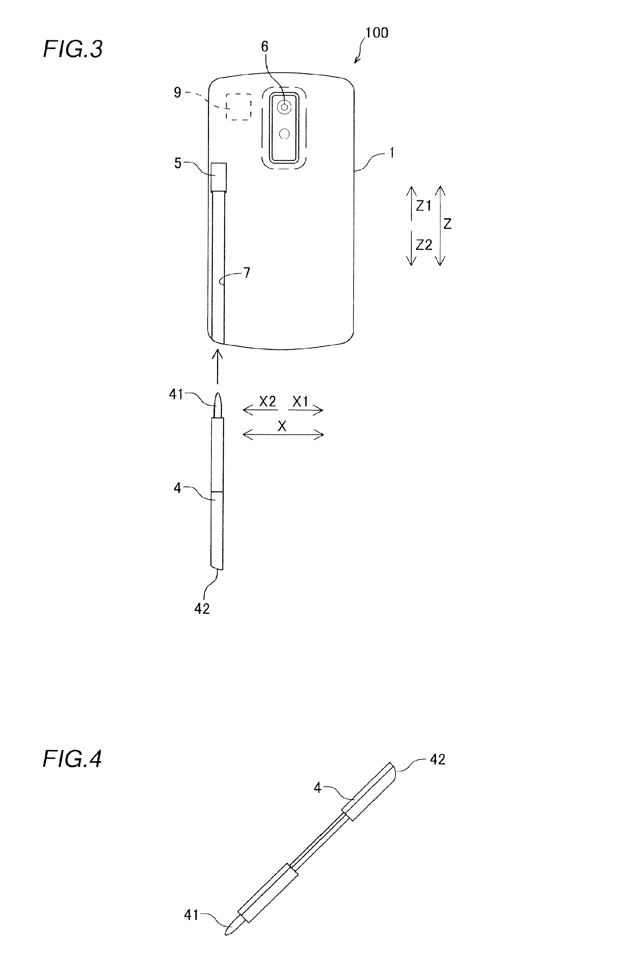

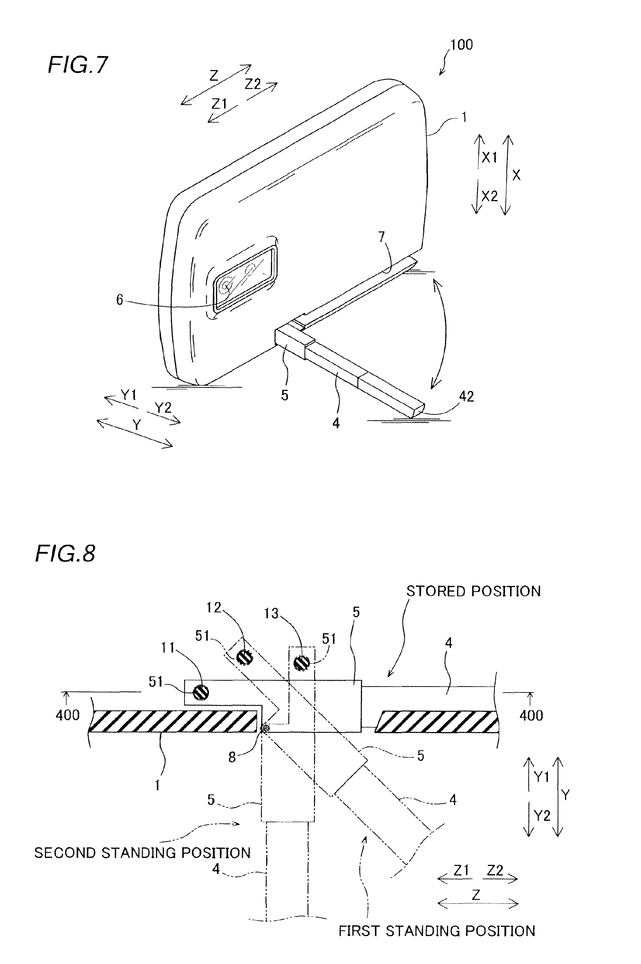

The stylus pen 4 is formed to be expandable/contractable, as shown in Figs. 3 and 4. Thus, the user can easily grasp the stylus pen 4 by expanding the same when employing the stylus pen 4 as an input pen, and can compactify the stylus pen 4 by contracting the same when storing the stylus pen 4 in the storage portion 7. The stylus pen 4 is so formed that the user inserts the same into the storage portion 7 from the lower side (along arrow Z2) of the body portion 1, as shown in Fig. 3. Further, the stylus pen 4 is so formed that the user inserts a forward end portion 41 thereof into a receiving hole (not shown) of the penholder 5 when storing the same, so that the penholder 5 holds the stylus pen 4. Thus, the penholder 5 holds the stylus pen 4. In order to use the stylus pen 4 as the input pen, the user extracts the stylus pen 4 from the penholder 5 and grasps the same. The stylus pen 4 is formed to also function as a stand for the body portion 1 as described later, in addition to the function as the input pen. Further, the stylus pen 4 is so formed that the user can rotate the same to a stored position (shown in Fig. 5) and to first and second standing positions (shown in Figs. 6 and 7 respectively) where the stylus pen 4 functions as the stand for the body portion 1 in the state held in the penholder 5, as described later. A rear end portion 42 of the stylus pen 4 is formed to be flush with the lower surface (along arrow Z2) of the body portion 1 when the stylus pen 4 is stored in the storage portion 7, as shown in Figs. 2 and 5. Further, the stylus pen 4 is formed to be flush with the rear surface of the body portion 1 in the state stored in the storage portion 7, as shown in Fig. 5.

According to this embodiment, the penholder 5 is provided on the rear side of the body portion 1. Further, the penholder 5 is formed to detachably hold the stylus pen 4 in the receiving hole (not shown). In addition, the penholder 5 is formed to be flush with the rear surface of the body portion 1 in the state where the stylus pen 4 is stored in the storage portion 7, as shown in Fig. 5. Further, the penholder 5 is formed to be rotatable with respect to the body portion 1. More specifically, the penholder 5 is formed to be rotatable with respect to the body portion 1 in the vertical direction (direction Z) in the state holding the stylus pen 4, as shown in Figs. 5 to 7.

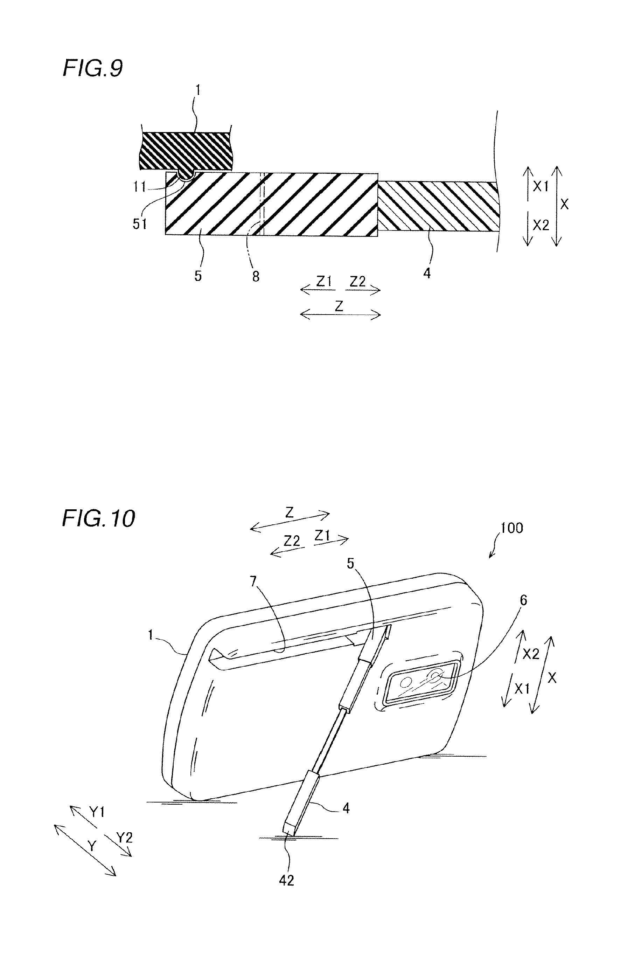

A rotating mechanism for the penholder 5 is now described in more detail with reference to Figs. 8 and 9. The penholder 5 is rotatably mounted on the body portion 1 with a pin 8 as shown in Fig. 8, and formed to rotate on the pin 8. The user can move the stylus pen 4 to the stored position (shown in Fig. 5) in the storage portion 7, the first standing position (shown in Fig. 6) rotated from the stored position by about 45° and the second standing position (shown in Fig. 7) rotated from the stored position by about 90° by rotating the penholder 5 holding the stylus pen 4 with respect to the body portion 1. The stylus pen 4 is so formed that the user moves the same to the stored position, to the first standing position and to the second standing position while the penholder 5 holds the stylus pen 4 and covers the forward end portion 41 thereof. Further, the stylus pen 4 is formed to function as the stand by supporting the rear side of the body portion 1 in the state held in the penholder 5 provided on the rear side of the body portion 1. The penholder 5 has a semicircular recess portion 51 on a portion opposite to the stylus pen 4 with respect to the pin 8, as shown in Figs. 8 and 9.

The recess portion 51 is provided on the side surface of the penholder 5 along arrow X1. The recess portion 51 of the penholder 5 is formed to engage with a first projecting portion 11 provided on the body portion 1 in the state where the stylus pen 4 is located on the stored position. Thus, the recess portion 51 regulates rotation of the stylus pen 4 from the stored position. Further, the recess portion 51 is formed to engage with second and third projecting portions 12 and 13 provided on the body portion 1 in the states where the stylus pen 4 is located on the first and second standing positions respectively. Thus, the recess portion 51 regulates rotation of the stylus pen 4 from the first and second standing positions. As shown in Figs. 8 and 9, the first, second and third projecting portions 11, 12 and 13 have semicircular shapes to be engageable with the recess portion 51 of the penholder 5, and are formed to protrude toward the penholder 5 (along arrow X2). The recess portion 51 is an example of the "first engaging portion" in the present invention. The first, second and third projecting portions 11, 12 and 13 are examples of the "third engaging portion", the "second engaging portion" and the "fourth engaging portion" in the present invention respectively.

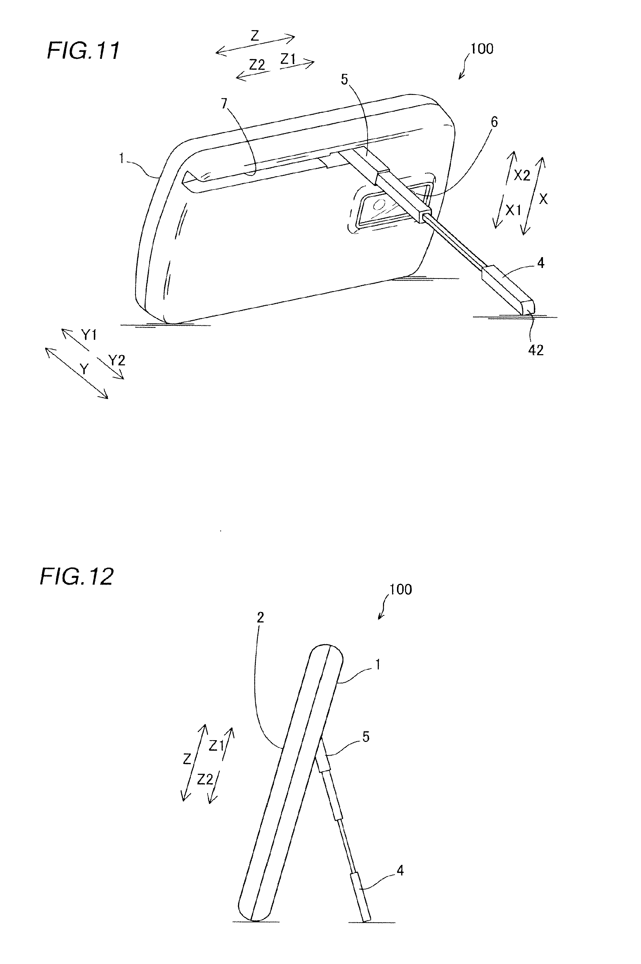

Due to the aforementioned structure, the portable telephone 100 according to this embodiment is self-supportable when the user employs the stylus pen 4 as the stand while downwardly directing (transversely placing) the side surface of the body portion 1 along arrow X2, as shown in Figs. 6 and 7. At this time, the display portion 2 is inclined with respect to the set surface by about 85°. Thus, the user can watch a TV program or the like without grasping the self-supporting portable telephone 100. Further, the portable telephone 100 is self-supportable when the user employs the stylus pen 4 as the stand while downwardly directing (transversely placing) the side surface of the body portion 1 along arrow X1. In this case, the user can change the angle of inclination of the display portion 2 with respect to the set surface by expanding/contracting the stylus pen 4. Further, the user can vary the angle of inclination of the display portion 2 with respect to the set surface in the case of arranging the stylus pen 4 on the first standing position (see Fig. 10) and in the case of arranging the same on the second standing position (see Fig. 11). The portable telephone 100 is self-supportable also when the user employs the stylus pen 4 as the stand while downwardly directing (vertically placing) the lower surface (along arrow Z2) of the body portion 1, as shown in Fig. 12. When the portable telephone 100 is in the self-supporting state, the user can also take a photograph with the camera lens 3 (see Fig. 1) provided on the front side of the body portion 1 by employing a self-timer function. The storage portion 7 is inwardly concaved into the body portion 1, as shown in Figs. 6, 7, 10 and 11. Further, the storage portion 7 is formed to extend in the direction Z and has a length substantially identical to that of the stylus pen 4 in the contracted state, as shown in Figs. 2 and 5. The concaved storage portion 7 is provided in the vicinity of an outer edge portion on the rear side of the body portion 1. In addition, the storage portion 7 is formed to be capable of storing the stylus pen 4 in the concave inner portion thereof.

According to this embodiment, as hereinabove described, the stylus pen 4 is so formed that the user can move the stylus pen 4 held in the penholder 5 to the standing positions (first and second standing positions) where the stylus pen 4 functions as the stand for the body portion 1 and to the stored position where the stylus pen 4 is arranged when in an unused state neither employed as the input pen nor functioning as the stand. Thus, the user can move the stylus pen 4 to the standing positions and to the stored position in the state held in the penholder 5. Therefore, the user may not detach or insert the stylus pen 4 from or into the penholder 5 in both of a case of employing the stylus pen 4 as the stand and thereafter storing the same in the stored position and a case of employing the stylus pen 4 as the stand from the stored state, but can easily store the stylus pen 4 or employ the same as the stand by simply moving the stylus pen 4 held in the penholder 5. Thus, the portable telephone 100 can prevent the user from complicated operations in the case of storing the stylus pen 4 employed as the input pen for the touch panel display portion 2 and in the case of employing the stylus pen 4 as the stand.

According to this embodiment, the stylus pen 4 is so formed that the user moves the same to the standing positions (first and second standing positions) and to the stored position by rotating the stylus pen 4 with respect to the body portion 1 in the state held in the penholder 5 so that the user can easily move the stylus pen 4 to the standing positions and to the stored position by simply rotating the same with respect to the body portion 1, whereby operations of the user can be more simplified in the case of storing the stylus pen 4 and in the case of employing the same as the stand.

According to this embodiment, the recess portion 51 of the penholder 5 is formed to engage with the second projecting portion 12 provided on the body portion 1 in the state where the stylus pen 4 is located on the first standing position for regulating rotation of the stylus pen 4 from the first standing position. When the stylus pen 4 is located on the first standing position, therefore, the recess portion 51 and the second projecting portion 12 can regulate rotation of the stylus pen 4 from the first standing position, whereby the stylus pen 4 can stably support the body portion 1.

According to this embodiment, the recess portion 51 of the penholder 5 is formed to engage with the first projecting portion 11 provided on the body portion 1 in the state where the stylus pen 4 is located on the stored position for regulating rotation of the stylus pen 4 from the stored position. When the stylus pen 4 is located on the stored position, therefore, the recess portion 51 and the first projecting portion 11 can regulate rotation of the stylus pen 4 from the stored position, whereby the user can reliably store the stylus pen 4 in the stored position.

According to this embodiment, the recess portion 51 of the penholder 5 is formed to engage with the second projecting portion 12 corresponding to the first standing position for regulating rotation of the stylus pen 4 from the first standing position and to engage with the third projecting portion 13 corresponding to the second standing position for regulating rotation of the stylus pen 4 from the second standing position. Thus, the stylus pen 4 can stably support the body portion 1 on both of the first and second standing positions where the same is at different rotation angles, whereby the user can properly use the first and second standing positions in response to the situation of the place where the body portion 1 is set. Thus, the convenience of the user can be improved.

According to this embodiment, the body portion 1 is so provided with the concave storage portion 7 for storing the stylus pen 4 that the user can arrange the stylus pen 4 in the concave storage portion 7 of the body portion 1 when storing the same, whereby increase in outer size of the portable telephone 100 storing the stylus pen 4 can be suppressed, dissimilarly to a case where the user arranges the stylus pen 4 outside the body portion 1 when storing the same.

According to this embodiment, the stylus pen 4 is expandable/contractable and formed to be capable of functioning as the stand for the body portion 1 in both of the expanded and contracted states on the standing positions, whereby the user can easily change the angle of inclination of the display portion 2 with respect to the set surface by expanding or contracting the stylus pen 4 on the standing positions.

According to this embodiment, the stylus pen 4 is so formed that the user stores the same in the stored position in the contracted state so that the user can store the stylus pen 4 in the stored position in a compactly contracted state, whereby the body portion 1 may not be increased in size in order to store the stylus pen 4 but can be compactified as compared with a case where the user stores the stylus pen 4 in the expanded state.

According to this embodiment, the penholder 5 is provided on the rear side of the body portion 1 opposite to the side provided with the display portion 2 and the stylus pen 4 is formed to function as the stand by supporting the rear side of the body portion 1 in the state held in the penholder 5 provided on the rear side of the body portion 1 so that the stylus pen 4 is not arranged on the side of the display portion 2 when functioning as the stand, whereby the stylus pen 4 can be prevented from blocking the visual field of the user watching the display portion 2.

According to this embodiment, the penholder 5 is provided in the vicinity of the outer edge portion of the body portion 1, whereby the user can easily change the angle of inclination of the display portion 2 with respect to the set surface by upwardly or downwardly directing the outer edge portion of the body portion 1 on the side provided with the penholder 5 while arranging the stylus pen 4 held in the penholder 5 on either standing position.

According to this embodiment, the concave storage portion 7 is provided on the rear side of the body portion 1 and the stylus pen 4 is formed to be flush with the rear surface of the body portion 1 in the state stored in the concave storage portion 7 so that the stylus pen 4 is flush with the rear surface of the body portion 1 in the state stored in the concave storage portion 7 thereof, whereby the stylus pen 4 can be prevented from touching the hand of the user when he/she carries the portable telephone 100.

According to this embodiment, the camera lens 3 included in the two camera lenses 3 and 6 is provided on the front side of the body portion 1 opposite to the side where the stylus pen 4 is arranged when functioning as the stand for the body portion 1, whereby the user can easily take a photograph with the camera lens 3 provided on the front side of the body portion 1 by employing a self-timer or the like in the self-supporting state of the body portion 1.

Although the present invention has been described and illustrated in detail, it is clearly understood that the same is by way of illustration and example only and is not to be taken by way of limitation, the spirit and scope of the present invention being limited only by the terms of the appended claims.

For example, while the portable telephone is employed as an example of the electronic apparatus in the aforementioned embodiment, the present invention is not restricted to this. The present invention may alternatively be applied to an electronic apparatus, such as a PDA (personal digital assistant), for example, other than the portable telephone.

While the portable telephone is so formed that the user moves the stylus pen held in the penholder to the stored position and to the standing positions by rotating the same with respect to the body portion in the aforementioned embodiment, the present invention is not restricted to this. According to the present invention, the portable telephone may alternatively be so formed that the user moves the stylus pen to the stored position and to the standing positions by an operation of linearly moving the stylus pen, for example, other than the rotating operation, so far as the stylus pen is held in the penholder.

While the penholder is provided independently of the body portion to be rotatable with respect to the body portion in the aforementioned embodiment, the present invention is not restricted to this. According to the present invention, the penholder may alternatively be integrally provided on the body portion. In this case, the portable telephone is so formed that a fixed penholder integrally provided on the body portion rotatably holds the stylus pen.

While the portable telephone is so formed that the penholder is rotatable with respect to the body portion so that the user rotates the stylus pen held in the penholder in the aforementioned embodiment, the present invention is not restricted to this. According to the present invention, the portable telephone may alternatively be so formed that the stylus pen itself is provided with a rotating mechanism (hinge mechanism, for example) so that the user rotates only the stylus pen held in the penholder with the rotating mechanism provided on the stylus pen itself without rotating the penholder with respect to the body portion.

While the portable telephone is so formed that the semicircular recess portion of the penholder functioning as the first engaging portion and the semicircular second projecting portion (first or third projecting portion) functioning as the second engaging portion (third or fourth engaging portion) engage with each other thereby regulating rotation of the stylus pen in the aforementioned embodiment, the present invention is not restricted to this. According to the present invention, the portable telephone may alternatively be so formed that engaging portions such as a pawl-shaped protrusion and a hook-shaped engaging portion engaging therewith, other than the semicircular recess portion and the semicircular projecting portion, engage with each other thereby regulating rotation of the stylus pen.

While the portable telephone is so formed that the stylus pen functions as the stand on the two standing positions, i.e., the first and second standing positions in the aforementioned embodiment, the present invention is not restricted to this. According to the present invention, the portable telephone may alternatively be so formed that the stylus pen functions as the stand on one or at least three standing positions, or that the stylus pen functions as the stand on any position other than the stored position in a stepless manner.

While the portable telephone is so formed that the user stores the stylus pen in the concave storage portion in the aforementioned embodiment, the present invention is not restricted to this. According to the present invention, the portable telephone may alternatively be so formed that the user stores the stylus pen in a cylindrical storage portion, for example, other than the concave storage portion, so far as the user can move the stylus pen held in the penholder to the stored position and to the standing positions.

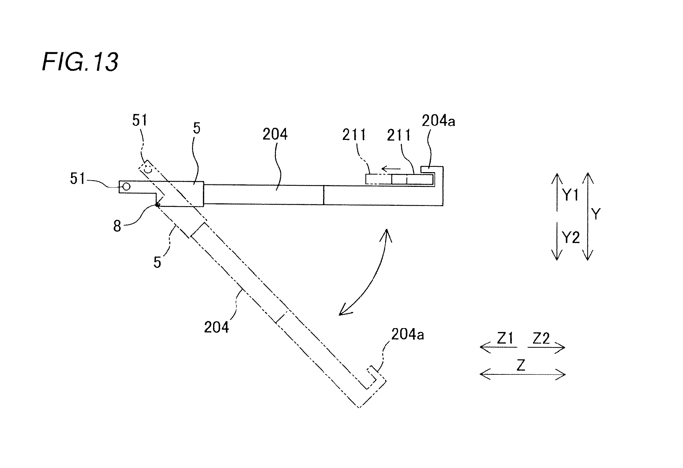

While the portable telephone is so formed that the recess portion of the penholder functioning as the first engaging portion engages with the projecting portion functioning as the third engaging portion in the state where the stylus pen is located on the stored position thereby regulating rotation of the stylus pen from the stored position in the aforementioned embodiment, the present invention is not restricted to this. According to the present invention, the portable telephone may alternatively be provided with a mechanism for regulating rotation of the stylus pen from the stored position in the state where the stylus pen is located on the stored position in place of or in addition to the engagement of the first and second engaging portions. More specifically, a substantially J-shaped hook portion 204a is provided on a rear end portion of a stylus pen 204 while an engaging portion 211 engaging with the hook portion 204a is provided on a body portion as shown in Fig. 13, for example. The engaging portion 211 engages with the hook portion 204a in a state where the stylus pen 204 is located on a stored position, thereby regulating rotation of the stylus pen 204 from the stored position. The engaging portion 211 may be formed to be slidable in a direction Z so that the user disengages the engaging portion 211 and the hook portion 204a from each other by sliding the engaging portion 211 along arrow Z1 thereby allowing rotation of the stylus pen 204 from the stored position.

## Claims

1. An electronic apparatus (100) comprising:
a body portion (1);
a touch panel display portion (2);
a pen (4) employed for inputting data into said display portion; and
a penholder (5) detachably holding said pen so that the user can detach said pen from said penholder when employing said pen as an input pen, and
so formed that the user can move said pen held in said penholder to a standing position where said pen functions as a stand for said body portion and to a stored position where said pen is arranged when in an unused state neither employed as said input pen nor functioning as said stand.

2. The electronic apparatus according to claim 1,
wherein
said pen is so formed that the user moves said pen to said standing position and to said stored position by rotating said pen with respect to said body portion in the state held in said penholder.

3. The electronic apparatus according to claim 2,
wherein
said penholder is formed to be rotatable with respect to said body portion and has a first engaging portion (51), and
said first engaging portion of said penholder is formed to engage with a second engaging portion (12) provided on said body portion in a state where said pen is located on said standing position for regulating rotation of said pen from said standing position.

4. The electronic apparatus according to claim 3,
wherein
said first engaging portion of said penholder is formed to engage with a third engaging portion (11) provided on said body portion in a state where said pen is located on said stored position for regulating rotation of said pen from said stored position.

5. The electronic apparatus according to claim 3,
wherein
said standing position includes a first standing position corresponding to said second engaging position and a second standing position where said pen is at a rotation angle different from that on said first standing position, and
said first engaging portion of said penholder is formed to engage with said second engaging portion corresponding to said first standing position for regulating rotation of said pen from said first standing position and to engage with a fourth engaging portion (13) corresponding to said second standing position for regulating rotation of said pen from said second standing position.

6. The electronic apparatus according to claim 3,
wherein
said first engaging portion has either a concave shape or a convex shape, and
said second engaging portion has either a convex shape or a concave shape corresponding to said concave or convex shape of said first engaging portion.

7. The electronic apparatus according to claim 1,
wherein
said body portion includes a recess portion (7) for storing said pen, and
said pen is so formed that the user arranges said pen on said stored position by inserting said pen held in said penholder into said recess portion in said unused state.

8. The electronic apparatus according to claim 1,
wherein
said pen is expandable/contractable, and formed to be capable of functioning as said stand for said body portion in both of an expanded state and a contracted state on said standing position.

9. The electronic apparatus according to clam 8,
wherein
said pen is so formed that the user stores said pen in said stored position in said contracted state.

10. The electronic apparatus according to claim 1,
wherein
said pen is so formed that the user moves said pen to said standing position and to said stored position while said penholder holds said pen and covers the nib.

11. The electronic apparatus according to claim 1,
wherein
said penholder is provided on the rear side of said body portion opposite to the side provided with said display portion, and
said pen is formed to function as said stand by supporting the rear side of said body portion in the state held in said penholder provided on the rear side of said body portion.

12. The electronic apparatus according to claim 11,
wherein
a recess portion for storing said pen is provided on the rear side of said body portion, and
said pen is formed to be flush with the rear surface of said body portion in a state stored in said recess portion.

13. The electronic apparatus according to claim 1,
wherein
said penholder is provided in the vicinity of an outer edge portion of said body portion.

14. The electronic apparatus according to claim 1, having a camera function, wherein
said body portion is provided with a plurality of camera lenses (3, 6), and
at least one of said plurality of camera lenses is provided on the front side of said body portion opposite to the side where said pen is arranged when functioning as said stand for said body portion.
